# EUROPÄISCHE PATENTSCHRIFT

(11) **EP 4 097 384 B1**
(45) Veröffentlichungstag und Bekanntmachung des Hinweises auf die Patenterteilung: **24.01.2024**
(21) Anmeldenummer: 21702462.9
(22) Anmeldetag: 28.01.2021
(51) Int. Cl.: F16L 29/02, F16L 41/00

(54) **ANSCHLUSSARMATUR FÜR EINE VENTIL- UND/ODER MESSKUPPLUNG FÜR FLUIDISCHE SYSTEME ZUR ERFASSUNG VON FLUIDDRÜCKEN SOWIE ZUR BEFÜLLUNG, ENTLEERUNG UND ENTLÜFTUNG FLUDISCHER SYSTEME**
CONNECTION FITTING FOR A VALVE COUPLING AND/OR TEST COUPLING FOR FLUID SYSTEMS FOR DETECTING FLUID PRESSURES AND FOR FILLING, EMPTYING AND VENTING FLUID SYSTEMS
ARMATURE DE RACCORDEMENT POUR UN ACCOUPLEMENT DE VANNE ET/OU DE MESURE POUR DES SYSTÈMES FLUIDIQUES DESTINÉS À DÉTECTER DES PRESSIONS DE FLUIDES, À REMPLIR, VIDER ET DÉSAÉRER DES SYSTÈMES FLUIDIQUES

(30) Priorität: 30.01.2020 DE 102020102277
(43) Veröffentlichungstag der Anmeldung: 07.12.2022
(73) Patentinhaber: Hydrotechnik GmbH, 65549 Limburg (DE)
(72) Erfinder: WOLF, Thomas, 65620 Waldbrunn (DE)
(74) Vertreter: Weckenbrock, Matthias
(86) Internationale Anmeldenummer: PCT/EP2021/051957
(87) Internationale Veröffentlichungsnummer: WO 2021/151996

(56) Entgegenhaltungen:
- WO-A1-99/46530
- DE-A1- 2 628 444

## Beschreibung

Die Erfindung betrifft einen Fluidanschluss gemäß Oberbegriff von Anspruch 1.

Ventil- und/oder Messkupplungen, die auch als mechanisch entsperrbare Rückschlagventile bezeichnet werden können, der oben aufgeführten Art sind bereits bekannt und dienen zum Beispiel zur Herstellung von Prüf- oder Messanschlüssen an Druckleitungen, wobei in der Regel die Kupplungsbuchse mit ihrem Einschraubgewinde fest an einem fluidischen System installiert ist. Für die Dauer der Prüf- oder Messarbeiten wird auf diese Kupplungsbuchse ein als Hohlzapfen ausgebildeter Öffnungspin mittels Überwurfmutter aufgeschraubt, der mit einem Schlauch oder direkt mit einem Druckaufnehmer verbunden werden kann.

Die Kupplungen können unter Druck, d.h. ohne die Anlage stillzusetzen, mit einer Anschlussarmatur verbunden werden. Mit solchen Ventil- und Messkupplungen lassen sich daher die effektiven Arbeitsdrücke direkt in fluiden Systemen messen, wobei keine Druckentlastung und kein Lösen von Entlüftungsschrauben oder Rohrverschraubungen erforderlich ist. Solche Kupplungen finden bei den verschiedensten Bauelementen und Regelungen von Fluid-Systemen Verwendung.

Nach dem Trennen des Kupplungsanschlusses wird gewöhnlich auf die Kupplungsbuchse mit Außengewinde eine Schutzkappe aufgeschraubt, die den Zweck hat, das Eindringen von Schmutz in die Kupplungsbuchse zu verhindern, und welche darüber hinaus eine zusätzliche Abdichtfunktion übernimmt, für den Fall, dass ein in die Kupplungsbuchse installiertes Rückschlagventil nicht absolut dicht schließt. Die Abdichtfunktion wird durch einen geschlossenen Pin in der Schutzkappe dargestellt, welcher im aufgeschraubten Zustand in die Sekundärabdichtung der Kupplungsbuchse eintaucht.

Aus der DE 41 32 690 A1 ist eine Ventil- und Messkupplung für fluidische Systeme mit hohen Arbeitsdrücken, hochfrequenten Druckschwingungen und mechanischen Vibrationen, zur Messung von Drücken sowie in Kombination von Drücken und Temperaturen bekannt. Sie umfasst eine Kupplungsbuchse, in deren Bohrung ein federbelastetes Rückschlagventil mit einem Dichtungssystem angeordnet ist. Nachteilig bei dem Anschluss der bekannten Ventil- und Messkupplungen an entsprechende Anschlussarmaturen ist, dass diese i. d. Regel für Betriebsdrücke bis maximal 630 bar ausgelegt sind. Spezielle Anlagen erfordern dagegen bei der Kupplung Betriebsdrücke bis ca. 1.000 bar. Dabei wird eine Berstdruckfestigkeit von mindestens 4.000 bar und eine Dauerhaltbarkeit von 1.000.000 Druckimpulsen bei 1.330 bar gefordert. Auch das Kuppeln von Hand unter Druckbelastung soll bei mindestens 700 bar erfolgen können.

Aus der WO9946530 A1 ist eine weitere Ventil- und Messkupplung für fluidische Systeme bekannt.

Der Erfindung liegt daher die Aufgabe zugrunde, einen Fluidanschluss bereitzustellen. Diese Aufgabe wird erfindungsgemäß gelöst durch einen Fluidanschluss mit den Merkmalen des Anspruchs 1.

Die Anschlussarmatur weist einen Öffnungspin auf, wobei der Öffnungspin eine, insbesondere kreisförmige, geschlossene Kontaktfläche für das Ventil aufweist, wobei der Öffnungspin wenigstens einen zur Kontaktfläche seitlich verlaufenden Durchgang aufweist, durch welchen eine Verbindung zwischen der Anschlussarmatur und der Ventil- und Messkupplung hergestellt werden kann.

Vorteilhafte Ausgestaltungen der Erfindung sind Gegenstand der Unteransprüche.

Die Erfindung geht von der Überlegung aus, dass bekannte Anschlussarmaturen für Messkupplungen bei den genannten hohen Drücken nicht beschädigungsfrei gekuppelt werden können. Dies liegt insbesondere an der durchbohrten Ausgestaltung des Öffnungspins der Anschlussarmatur, der sich beim Kuppeln unter hohen Drücken verformt und eine zuverlässige Verbindung nicht mehr möglich macht.

Wie nunmehr erkannt wurde, kann den oben genannten Anforderungen Genüge getan werden, indem der Öffnungspin eine geschlossene Kontaktierungsfläche für das Ventil aufweist, wobei diese Kontaktierungsfläche nicht durch Bohrungen unterbrochen ist. Durch die nicht durchgängige Bohrung im Öffnungsnippel wirkt die Druckbelastung vom Ventil auf eine geschlossene Fläche, welche höherer Kräfte verformungsfrei aufnehmen kann als ein durchgebohrter und geschlitzter Öffnungspin, wie dies bei bisherigen Messkupplungen der Fall ist. Dies ermöglicht das beschädigungsfreie Kuppeln unter sehr hohen Drücken. Die fluidische Verbindung zwischen der Anschlussarmatur und der der Kupplung wird stattdessen durch wenigstens einen seitlich zur Kontaktfläche angeordneten Durchgang ermöglicht.

Die Anschlussarmatur ist mit der Kupplungsbuchse der Ventil- und/oder Messkupplung fest verbindbar, wobei der in der Bohrung der Kupplungsbuchse angeordnete federbelastete Ventilkörper des Rückschlagventils beim Einschrauben der Anschlussarmatur im Einsatzfall durch deren Öffnungspin gegen den Federdruck axial in die Offenstellung des Ventils verschiebbar ist und der Einstecknippel dabei gegen ein in einer mehrteiligen Dichtbuchse gelagertes, sekundäres Dichtungssystem abdichtet.

Vorteilhafterweise sind zwischen zwei und vier, insbesondere zwei Durchgänge bzw. Öffnungen vorgesehen.

Die Durchgänge verlaufen von der Kontaktfläche in Richtung des Ventilkörpers gesehen konisch in der Anschlussarmatur nach außen. Die Durchgänge sind vorzugsweise gerade bzw. kanalförmig ausgeführt.

Vorteilhafterweise weist die Anschlussarmatur einen Abstützkragen zur Abstützung einer Stützbuchse einer Ventil- und/oder Messkupplung auf.

In einer bevorzugten Ausführungsform umfasst die Anschlussarmatur ein Sägezahn-Innengewinde zur Aufnahme eines Sägezahn-Außengewindes des Anschlussteils einer Ventil- und/oder Messkupplung, wodurch gegenüber herkömmlichen Gewinden die Gewindereibung und damit das erforderliche Drehmoment beim Kuppeln unter Druck reduziert werden.

Der Ventilsitz ist vorteilhafterweise integral in der Kupplungsbuchse ausgebildet oder durch ein Fügeverfahren in der Kupplungsbuchse befestigt. Bei bekannten Messkupplungen wird das Ventil mit Hilfe eines Einsatzes gehalten, der ins Gehäuse geschraubt oder gesteckt und anschließend gebördelt wird. Diese Einschraubgewinde oder auch die Bördelungen halten diese hohen Drücke in der Regel nicht aus. Das bedeutet, dass bei Berstdrucktests diese Kupplungen vor Erreichen von 4000 bar versagen. Dadurch, dass das Ventil bzw. der Ventilkörper erfindungsgemäß im Gehäuse direkt abgestützt wird, also von der Kupplungsrückseite in das Gehäuse eingesetzt wird, entfallen Gewinde oder Bördelkanten, welche die Drücke halten müssen. Die Bezeichnung, wonach der Ventilsitz integral im Gehäuse ausgebildet ist, kennzeichnet bevorzugt einen Ventilsitz, der durch eine Innenfläche bzw. Innenoberfläche des Gehäuses gebildet ist. Insbesondere kennzeichnet er, dass der Ventilsitz keine zusätzlichen Komponenten bzw. Teile umfasst.

Vorteilhafterweise weist der Ventilsitz eine Innenkontur mit einem ersten Abschnitt auf, der parallel zur axialen Richtung der Bohrung verläuft, und einem sich daran in Richtung der Kupplungsbuchse verjüngenden zweiten Abschnitt, wobei eine Außenkontur des Ventilkörpers bereichsweise formkongruent zu den beiden Abschnitten ausgebildet ist, sodass durch die direkte Abstützung des Ventilkörpers an der Kupplungsbuchse die geforderten Parameter hinsichtlich Berstdruck, Dauerhaltbarkeit und dergleichen sicher eingehalten werden können. Dadurch, dass das Ventil am Gehäuse direkt abgestützt ist, ergibt sich gegenüber den bekannten Ventil- und Messkupplungen ein wesentlicher Produktionsvorteil, in dem Sinn, dass die Qualität einer mechanischen Verformung, Bördelung oder Verschraubung im Produktionsprozess nicht mehr kontrolliert werden muss, sodass sich selbst bei Fertigungstoleranzen stets eine Stabilisierung des Ventils ergibt.

Die Ventil- und Messkupplung umfasst erfindungsgemäß einen Dichtungsring, welcher in einer Nut des Ventilkörpers angeordnet ist, wobei die Nut einen trapezförmigen Querschnitt aufweist, welcher sich in radialer Richtung verjüngt. Durch die daraus resultierende Kammerung des Dichtungsrings bzw. O-Rings mit Hilfe der trapezförmigen Nut wird ein Herausziehen des O-Rings bei geöffnetem Ventil und hohen Strömungsgeschwindigkeiten und die sich hieraus ergebende Blockierung des Strömungsquerschnitts verhindert.

Bevorzugt sitzt der Dichtungsring bei geschlossenem Ventil nicht vollständig in dem Teil der Bohrung, der einen Abschnitt des Ventilsitzes darstellt, sodass ein größerer Durchflussquerschnitt schon bei geringem Ventilhub freigegeben wird.

In einer bevorzugten Ausführungsform ist der Ventilkörper zweiteilig aufgebaut mit einem Aufnehmeteil und einem Einsetzteil, wobei das Aufnehmeteil eine Sackbohrung aufweist, welche einen Zapfen des Einsetzteils aufnimmt, wobei zwischen einem Kragen des Einsetzteils und einem Kragen des Aufnehmeteils die Nut für den Dichtring gebildet ist. Bei der Herstellung der Messkupplung kann der Dichtring auf dem Kragen des Aufnehmeteils aufgesetzt werden, worauf der Zapfen des Einsetzteils in die Sackbohrung des Aufnehmeteils gesteckt wird, sodass der Dichtring in der trapezförmigen Nut angeordnet ist.

Bevorzugt weist die Kupplungsbuchse ein Außengewinde auf, welches als außenseitiges Sägezahngetriebe ausgebildet ist. Durch die Ausbildung des Gewindes mit Sägezahnprofil in entsprechender Ausrichtung werden die Gewindereibung und damit das erforderliche Drehmoment beim Kuppeln unter Druck reduziert.

Der Ausgestaltung der beschriebenen Ventil- und/oder Messkupplung kommt eine eigenständige erfinderische Leistung zu. Die Erfindung betrifft auch eine Ventil- und/oder Messkupplung für fluidische Systeme zur Erfassung von Arbeitsdrücken von fluidischen Medien, die Ventil- und/oder Messkupplung umfassend eine im eingebauten Zustand unter Betriebsdruck stehende Kupplungsbuchse mit einem Anschlussteil, und mit einer Bohrung, in der ein federbelastetes und mechanisch betätigbares Rückschlagventil angeordnet ist, dessen Ventilkörper sich im unbetätigten Zustand auf einem Ventilsitz abstützt. Die in den Ansprüchen und der Beschreibung beschriebenen Merkmale sind vorteilhafte Ausgestaltungen der Ventil- und/oder Messkupplung.

Die Vorteile der Erfindung liegen insbesondere darin, dass durch eine geschlossene Kontaktierungsfläche des Öffnungspin und den seitlich angeordneten Durchgänge ein Kuppeln bei hohen Drücken beschädigungsfrei erfolgen kann, wodurch die Zuverlässigkeit beim Kuppeln und die Lebensdauer der Anschlussarmatur und der angekuppelten Ventil- und/oder Messkupplung erhöht werden.

Die Anschlussarmatur für die Kupplung unterscheidet sich von bekannten Lösungen somit dadurch, dass der Öffnungspin nicht durchgebohrt ist. Dies würde zu dem Problem führen, dass das Ventil in der Ventil- und Messkupplung mit einem Kreisringquerschnitt aufgedrückt werden müsste. Die Fläche des Kreisringquerschnitts wäre allerdings so klein, dass sich der Ventilkörper beim Kuppeln unter hohen Drücken plastisch verformen und somit die Anschlussarmatur beschädigen würde. Der Öffnungspin ist daher bevorzugt nicht durchgebohrt und es wird mit einer geschlossenen Fläche auf das Ventil gedrückt, so dass sich eine geringere Flächenpressung auf den Öffnungspin ergibt.

Durch die Bildung des Ventilsitzes direkt im Innern der Kupplungsbuchse wird der Betrieb der Ventil- und Messkupplung bei Drücken von 1000 bar oder höher ermöglicht. Die Ausgestaltung des Ventilsitzes des Ventils direkt in der Kupplungsbuchse führt zu einem Produktionsvorteil in dem Sinne, dass die Qualität einer mechanischen Verformung, Bördelung oder Verschraubung im Produktionsprozess nicht kontrolliert werden müssen, sodass selbst bei Fertigungstoleranzen immer eine Stabilisierung des Ventils gewährleistet wird.

Die Ausbildung eines Sägezahnprofils am Außengewinde der Kupplungsbuchse reduziert die Gewindereibung in einer Richtung. Es kann hierbei eine deutliche Reduzierung des Öffnungsdrehmomentes gegenüber einem vergleichbaren Standardgewinde erreicht werden.

Weitere Ziele, Vorteile, Merkmale und Anwendungsmöglichkeiten der vorliegenden Erfindung ergeben sich aus der nachfolgenden Beschreibung eines Ausführungsbeispieles anhand einer Zeichnung.

Es zeigen:
- FIG. 1: eine Ventil- und Messkupplung in einer bevorzugten Ausführungsform in einer Querschnittszeichnung;
- FIG. 2: eine ausschnittsweise Darstellung der Ventil- und Messkupplung gemäß FIG. 1;
- FIG. 3: ein Anschlussteil mit Sägezahngewinde der Ventil- und Messkupplung gemäß FIG. 1;
- FIG. 4: eine Anschlussarmatur und eine Ventil- und Messkupplung in gekuppeltem, geöffnetem Zustand;
- FIG. 5: die Anschlussarmatur und die Ventil- und Messkupplung gemäß FIG. 4 im Entkuppelvorgang mit gerade geschlossenem Ventil; und
- FIG. 6: die Anschlussarmatur und die Ventil- und Messkupplung gemäß FIG. 4 im Entkuppelvorgang.

Gleiche Teile sind in allen Figuren mit denselben Bezugszeichen versehen.

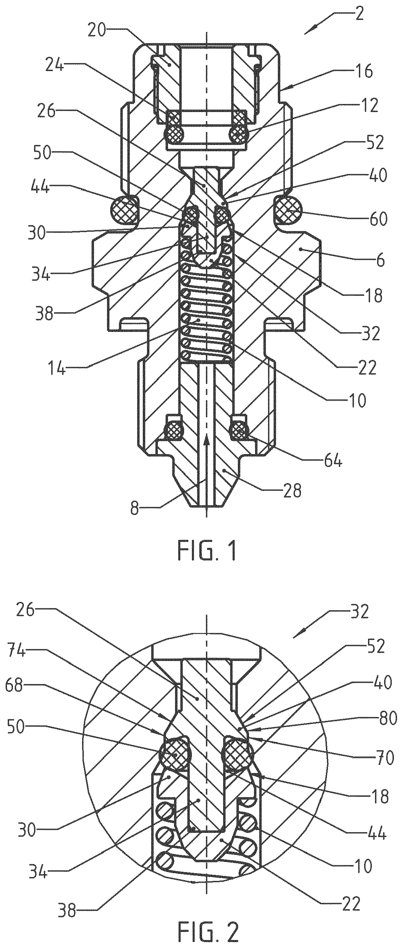

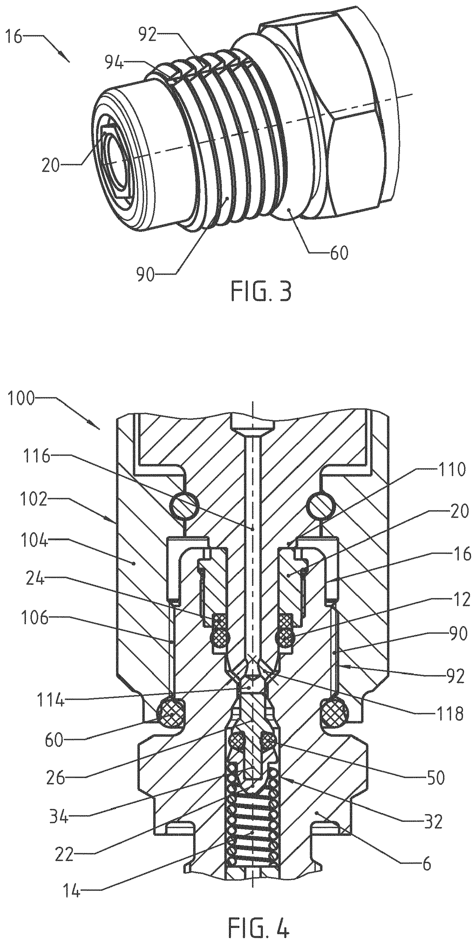

Eine in FIG. 1 dargestellte Ventil- und/oder Messkupplung 2 zur Druckmessung, Befüllung, Entleerung und Entlüftung von fluidischen Medien weist eine Kupplungsbuchse 6 auf, welche eine in Axialrichtung 8 verlaufende Bohrung 10 aufweist, in der eine Feder 14 angeordnet ist. Die Ventil- und/oder Messkupplung 2 weist einen Anschlussteil 16 auf, mit der sie mit einer entsprechenden Anschlussarmatur 102 (siehe FIG. 4) verbunden werden kann. In der Kupplungsbuche 6 ist eine Stützbuchse 20 angeordnet, welche mit der Kupplungsbuchse 6 eine Dichtring-Nut für einen Stützring 24 und einen Sekundärdichtring 12 bildet. Der Stützring 24 verhindert die Spaltextrusion des Sekundärdichtrings im gekuppelten Zustand bei hohen Drücken.

Ein Ventilkörper 18 ist zweiteilig ausgeführt mit einem Aufnehmeteil 22 und einem darin teilweise einsetzbaren Einsetzteil 26. Das Aufnehmeteil 22 erstreckt sich in axialer Richtung in die Feder 14 und weist einen Kragen 30 auf, der sich auf der Feder 14 abstützt. Das Einsetzteil 26 umfasst einen Zapfen 34, welcher in eine Sackbohrung 38 des Aufnehmeteils 22 eingeführt ist. An den Zapfen 34 schließt sich in axialer Richtung in Richtung des Anschlussteils 16 ein Kragen 40 an. Die beiden Kragen 30 und 40 bilden zwischen sich eine Nut 44, welche einen trapezförmigen Querschnitt aufweist. In der Nut 44 ist ein Dichtungsring 50 bzw. O-Ring angeordnet. Im unbetätigten Zustand, d.h. wenn auf dem Anschlussteil 16 keine Anschlussarmatur 102 (siehe FIG. 4) aufgeschraubt ist, stützt sich der Ventilkörper 18 auf einem Ventilsitz 52 ab. Ventilkörper 18, Feder 14 und Ventilsitz 52 bilden ein Rückschlagventil 32.

Die Messkupplung 2 weist einen Vibrationssicherungsring 60 auf, der beim Aufschrauben einer Anschlussarmatur 102 auf eine Messkupplung 2 vor dem Lösen einer Überwurfmutter 104 (siehe FIG. 4) durch Vibrationen schützt. Die Messkupplung 2 weist einen in die Bohrung 10 eingefügten Abschlussstopfen 28 mit Bohrung auf, der die Verbindung zum fluidischen System herstellt. Ein Dichtungsring 64 stellt die Dichtigkeit zwischen Kupplungsbuchse 6 und Abschlusstopfen 28 dar.

In FIG. 2 ist ausschnittweise die Messkupplung 2 (siehe FIG. 1) dargestellt. Der Ventilsitz 52 weist eine Innenkontur 68 auf mit einem ersten Abschnitt 70, der parallel zur axialen Richtung der Bohrung 10 verläuft, und einem sich daran in Richtung des Anschlussteils 16 (siehe FIG. 1) verjüngenden zweiten Abschnitt 74. Der Abschnitt 74 verjüngt sich dabei in Richtung des Anschlussteils 16 in radialer Richtung und wird insbesondere stetig enger. Für einen festen und zuverlässigen Sitz des Ventilkörpers 18 im Ventilsitz 52 weist der Ventilkörper 18, vorliegend das Einsetzteil 26, eine Außenkontur 80 auf, welche bereichsweise formkongruent zu den beiden Abschnitten 70, 74 ausgebildet ist.

Zwischen den Kragen 30, 40 der beiden Teile 22, 26 des Ventilkörpers 18 ist die Nut 44 gebildet, welche einen trapezförmigen Querschnitt aufweist, wobei die breitere Grundseite des Trapezes sich radial weiter innen befindet als die dazu im Wesentlichen parallele kürzere Seite des Trapezes. In der Nut 44 ist der Dichtungsring 50 angeordnet. Durch den trapezförmigen Querschnitt der Nut 44 wird ein fester und stabiler Sitz des Dichtungsringes 50 in der Nut 44 ermöglicht.

In FIG. 3 ist das Anschlussteil 16 der Ventil- und/oder Messkupplung 2 dargestellt, auf welchen z.B. für Druckmessungen eine Anschlussarmatur 102 mit Öffnungspin 114 (siehe FIG. 4) aufgeschraubt wird. Der Anschlussteil 16 weist ein Außengewinde 90 mit einer Sägezahnkontur 92 auf. Das Außengewinde ist in axialer Richtung an zumindest einer Stelle durch eine Nut 94 unterbrochen, durch welche ein Fluid beim Entkuppeln nach außen entweichen kann.

In FIG. 4 ist ausschnittsweise ein Fluidanschluss 100 mit einer Anschlussarmatur 102 und der Ventil- und/oder Messkupplung 2 gemäß FIG. 1-3 dargestellt. Die Anschlussarmatur 102 ist dabei in das Anschlussteil 16 der Ventil- und/oder Messkupplung 2 eingeschraubt. Die Anschlussarmatur 102 weist dazu ein zum Außengewinde 92 des Anschlussteils korrespondierendes Innengewinde 106 auf. Die Anschlussarmatur 102 weist weiterhin einen Unterstützungskragen 110 auf, welcher im eingeschraubten Zustand die Stützbuchse 20 unterstützt. Im gekuppelten Zustand wirkt der Betriebsdruck auf die Sekundärdichtung 12 und damit auf die eingeschraubte Stützbuchse 20. Zusätzlich drückt die Anschlussarmatur 102 im gekuppelten Zustand auf die Stützbuchse 20 und trägt somit auch einen Teil der Druckkräfte.

Die Anschlussarmatur 102 weist einen Kanal 116 auf, der in einem Öffnungspin 114 mündet und über seitliche unter einem Winkel angebrachte Durchgänge 118 die fluidische Verbindung zu dem in der Ventil- und/oder Messkupplung 2 unter hohem Druck stehenden Fluid herstellt. Eine Bohrung im Öffnungspin 114 ist nicht-durchgängig ausgeführt. Durch die nicht durchgängige Bohrung im Öffnungspin 114 wirkt die Druckbelastung vom Ventil auf eine geschlossene Fläche, welche höhere Kräfte verformungsfrei aufnehmen kann als ein durchgebohrter und geschlitzter Nippel wie dies bei bisherigen Ventil- und Messkupplungen der Fall ist. Dies ermöglicht das beschädigungsfreie Kuppeln unter sehr hohen Drücken. In der FIG. 4 ist der Fluidanschluss 100 in einer Drucksituation dargestellt, in der das Ventil geöffnet ist.

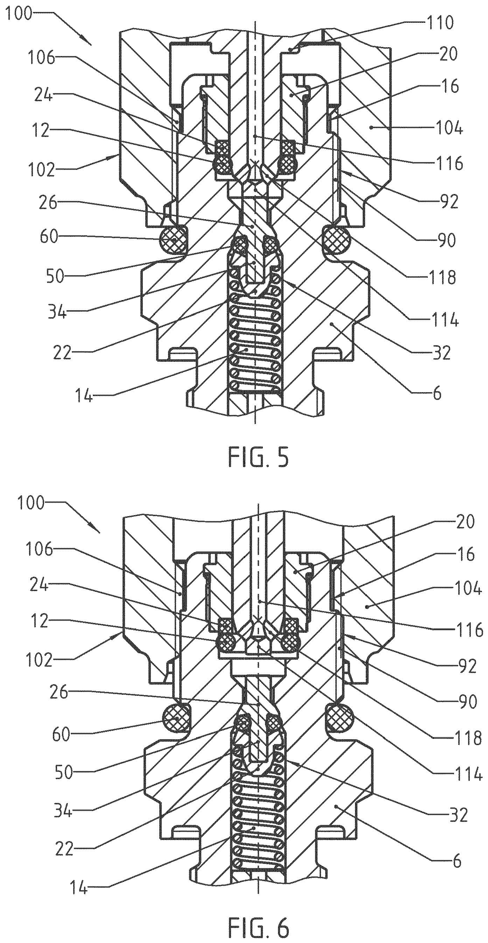

Die FIG. 5 zeigt den Fluidanschluss 100 mit geschlossenem Ventil 32. Das Ventil 32 ist dabei gerade geschlossen, der Öffnungspin 114 wird immer noch von der Sekundärdichtung 12 abgedichtet. In FIG. 6, welches ein weiteres Entkuppeln zeigt, taucht der Öffnungspin 114 aus der Sekundärdichtung 12 aus. In der Anschlussarmatur 102 unter Druck stehendes Fluid kann über den Spalt zwischen der Stützbuchse 20 und dem Öffnungspin 114 und über die Nut 94 (siehe FIG. 3) im Kupplungsgewinde nach Außen entweichen. Das Außengewinde 90 des Anschlussteils 16 ist in dem gezeigten Zustand immer noch in Eingriff mit dem entsprechenden Innengewinde 106 der Anschlussarmatur 102.

Da das Innengewinde 106 der Anschlussarmatur 102 immer noch im Eingriff ist, wenn der Öffnungspin aus der Sekundärdichtung 12 austaucht, wird dem Anwender durch das entweichende Fluid signalisiert, dass seine Anschlussarmatur 102 noch unter Druck steht. Wäre dies nicht der Fall, würde sich besonders bei gasförmigen Fluiden der Druck beim Lösen des letzten Gewindegangs schlagartig entspannen, und die Anschlussarmatur 102 könnte den Anwender verletzen.

### Bezugszeichenliste

- 2: Messkupplung
- 6: Kupplungsbuchse
- 8: Axialrichtung
- 10: Bohrung
- 12: Sekundärdichtung
- 14: Feder
- 16: Anschlussteil
- 18: Ventilkörper
- 20: Stützbuchse
- 22: Aufnehmeteil
- 24: Stützring
- 26: Einsetzteil
- 28: Abschlussstopfen
- 30: Kragen
- 32: Rückschlagventil
- 34: Zapfen
- 38: Sackbohrung
- 40: Kragen
- 44: Nut
- 50: Dichtungsring
- 52: Ventilsitz
- 60: Vibrationssicherungsring
- 64: Dichtungsring
- 68: Innenkontur
- 70: erster Abschnitt
- 74: zweiter Abschnitt
- 80: Außenkontur
- 90: Außengewinde
- 92: Sägezahnkontur
- 94: Nut
- 100: Fluidanschluss
- 102: Anschlussarmatur
- 104: Überwurfmutter
- 106: Innengewinde
- 110: Unterstützungskragen
- 114: Öffnungspin
- 116: Kanal
- 118: Durchgang

## Patentansprüche

1. Fluidanschluss (100), umfassend eine Anschlussarmatur (102), welche einen Öffnungspin (114) aufweist, und eine Ventil- und/oder Messkupplung (2) für fluidische Systeme zur Erfassung von Arbeitsdrücken von fluidischen Medien, welche eine im eingebauten Zustand unter Betriebsdruck stehende Kupplungsbuchse (6) mit einem Anschlussteil (16) umfasst, und mit einer Bohrung (10), in der ein federbelastetes und mechanisch betätigbares Rückschlagventil (32) angeordnet ist, dessen Ventilkörper (18) sich im unbetätigten Zustand auf einem Ventilsitz (52) abstützt und durch die Kontaktfläche des Öffnungspins (114) kontaktierbar ist, wobei die Anschlussarmatur (102) ausgelegt ist zum Anschrauben auf das Anschlussteil (16) der Ventil- und/oder Messkupplung (2), und wobei der Öffnungspin (114) eine, insbesondere kreisförmige, geschlossene Kontaktfläche für das Ventil (32) und wenigstens einen zur Kontaktfläche seitlich verlaufenden Durchgang (118) aufweist, durch welchen eine Verbindung zwischen der Anschlussarmatur (102) und der Ventil- und/oder Messkupplung (2) hergestellt werden kann,
**dadurch gekennzeichnet, dass**
die Ventil- und/oder Messkupplung (2) einen Dichtungsring (50) umfasst, welcher in einer Nut (44) des Ventilkörpers (18) angeordnet ist, wobei die Nut (44) einen trapezförmigen Querschnitt aufweist, welcher sich in radialer Richtung verjüngt.

2. Fluidanschluss (100) nach Anspruch 1, wobei der Ventilsitz (52) integral in der Kupplungsbuchse (6) ausgebildet ist oder durch ein Fügeverfahren in der Kupplungsbuchse (6) befestigt ist.

3. Fluidanschluss (100) nach Anspruch 1 oder 2, wobei der Ventilsitz (52) eine Innenkontur (68) aufweist mit einem ersten Abschnitt (70), der parallel zur axialen Richtung der Bohrung (10) verläuft, und einem sich daran in Richtung des Anschlussteils (16) verjüngenden zweiten Abschnitt (74), und wobei eine Außenkontur (80) des Ventilkörper (18) bereichsweise formkongruent zu den beiden Abschnitten (70, 74) ausgebildet ist.

4. Fluidanschluss (100) nach Anspruch 3, wobei der Dichtungsring (50) bei geschlossenem Ventil (32) nicht vollständig in dem Teil der Bohrung (10) sitzt, der einen Abschnitt des Ventilsitzes (52) darstellt.

5. Fluidanschluss (100) nach einem der Ansprüche 1 bis 4, wobei der Ventilkörper (18) zweiteilig aufgebaut ist mit einem Aufnehmeteil (22) und einem Einsetzteil (26), wobei das Aufnehmeteil (22) eine Sackbohrung (38) aufweist, welche einen Zapfen (34) des Einsetzteils (26) aufnimmt, wobei zwischen einem Kragen (40) des Einsetzteils (26) und einem Kragen (30) des Aufnehmeteils (22) eine trapezförmige Nut (44) für den Dichtungsring (50) gebildet ist.

6. Fluidanschluss (100) nach einem der Ansprüche 1 bis 5, wobei das Anschlussteil (16) ein Außengewinde (90) aufweist, welches als Sägezahn-Außengewinde ausgebildet ist, und wobei die Anschlussarmatur (102) ein Sägezahn-Innengewinde (106) zur Aufnahme des Sägezahn-Außengewindes (90) des Anschlussteils (16) der Ventil- und Messkupplung (2) umfasst.

7. Fluidanschluss (100) nach einem der Ansprüche 1 bis 6, wobei zwischen zwei und vier, insbesondere zwei Durchgänge (118) vorgesehen sind.

8. Fluidanschluss (100) nach Anspruch 7, wobei die Durchgänge (118) von der Kontaktfläche in Richtung des Ventilkörpers (18) gesehen konisch nach außen verlaufen.

9. Fluidanschluss (100) nach einem der Ansprüche 1 bis 8, mit einem Abstützkragen (110) zur Abstützung einer Stützbuchse (20) einer Ventil- und/oder Messkupplung (2).

## Claims

1. Fluid connection (100), comprising a connection fitting (102) which has an opening pin (114), and a valve and/or measurement coupling (2) for fluidic systems for detecting operating pressures of fluidic media, which comprises a coupling bushing (6) that in the installed state is under the operating pressure and has a connection part (16), and having a bore (10) in which a springloaded and mechanically activatable check valve (32) is disposed, the valve member (18) of the latter in the non-activated state being supported on a valve seat (52) and being able to be contacted by the contact face of the opening pin (114), wherein the connection fitting (102) is conceived to be screwed to the connection part (16) of the valve and/or measurement coupling (2), and wherein the opening pin (114) has an in particular circular closed contact face for the valve (32), and at least one passage (118) which runs laterally in relation to the contact face by way of which a connection between the connection fitting (102) and the valve and/or measurement coupling (2) can be established,
**characterized in that**
the valve and/or measurement coupling (2) comprises an annular seal (50) which is disposed in a groove (44) of the valve member (18), wherein the groove (44) has a trapezoidal cross section which tapers in the radial direction.

2. Fluid connection (100) according to Claim 1, wherein the valve seat (52) is configured so as to be integral in the coupling bushing (6), or is fastened in the coupling bushing (6) by a joining method.

3. Fluid connection (100) according to Claim 1 or 2, wherein the valve seat (52) has an internal contour (68) with a first portion (70) which runs parallel to the axial direction of the bore (10), and an adjoining second portion (74) which tapers in the direction of the connection part (16), and wherein an external contour (80) of the valve member (18) in regions, in terms of shape, is configured to be congruent with the two portions (70, 74).

4. Fluid connection (100) according to Claim 3, wherein the annular seal (50), in the case of a closed valve (32), does not sit completely in that part of the bore (10) that represents a portion of the valve seat (52).

5. Fluid connection (100) according to one of Claims 1 to 4, wherein the valve member (18) is constructed in two parts, having a receptacle part (22) and an insert part (26), wherein the receptacle part (22) has a blind bore (38) which receives a neck (34) of the insert part (26), wherein a trapezoidal groove (44) for the annular seal (50) is formed between a collar (40) of the insert part (26) and a collar (30) of the receptacle part (22).

6. Fluid connection (100) according to one of Claims 1 to 5, wherein the connection part (16) has an external thread (90) which is configured as an external buttress thread, and wherein the connection fitting (102) has an internal buttress thread (106) for receiving the external buttress thread (90) of the connection part (16) of the valve and measurement coupling (2).

7. Fluid connection (100) according to one of Claims 1 to 6, wherein between two and four, in particular two, passages (118) are provided.

8. Fluid connection (100) according to Claim 7, wherein the passages (118), when viewed from the contact face in the direction of the valve member (18), run outwards in a conical manner.

9. Fluid connection (100) according to one of Claims 1 to 8, having a support collar (110) for supporting a support bushing (20) of a valve and/or measurement coupling (2).

## Revendications

1. Raccord de fluide (100), comprenant une armature de raccordement (102), qui présente une broche d'ouverture (114), et un accouplement de vanne et/ou de mesure (2) pour des systèmes fluidiques destinés à détecter des pressions de travail de milieux fluidiques, qui comprend une douille d'accouplement (6) sous pression de service à l'état monté, avec une pièce de raccordement (16), et avec un alésage (10) dans lequel est agencé un clapet anti-retour (32) sollicité par ressort et actionnable mécaniquement, dont le corps de vanne (18) s'appuie, à l'état non actionné, sur un siège de vanne (52) et est apte à être contacté par la surface de contact de la broche d'ouverture (114), l'armature de raccordement (102) étant conçue pour être vissée sur la pièce de raccordement (16) de l'accouplement de vanne et/ou de mesure (2), et la broche d'ouverture (114) présentant une surface de contact de la pièce de raccordement (16), notamment circulaire, une surface de contact fermée pour la vanne (32) et au moins un passage (118) s'étendant latéralement par rapport à la surface de contact, par lequel une liaison est apte à être établie entre l'armature de raccordement (102) et l'accouplement de vanne et/ou de mesure (2),
**caractérisé en ce que**
l'accouplement de vanne et/ou de mesure (2) comprend une bague d'étanchéité (50) qui est agencée dans une rainure (44) du corps de vanne (18), la rainure (44) présentant une section transversale trapézoïdale qui se rétrécit dans la direction radiale.

2. Raccord de fluide (100) selon la revendication 1, dans lequel le siège de vanne (52) est formé d'un seul tenant dans la douille d'accouplement (6) ou est fixé dans la douille d'accouplement (6) par un procédé d'assemblage.

3. Raccord de fluide (100) selon la revendication 1 ou la revendication 2, dans lequel le siège de vanne (52) présente un contour intérieur (68) avec une première section (70) qui s'étend parallèlement à la direction axiale de l'alésage (10) et une deuxième section (74) qui se rétrécit sur celle-ci en direction de la pièce de raccordement (16), et dans lequel un contour extérieur (80) du corps de vanne (18) est réalisé par zones en congruence de forme avec les deux sections (70, 74).

4. Raccord de fluide (100) selon la revendication 3, dans lequel la bague d'étanchéité (50) n'est pas entièrement logée dans la partie de l'alésage (10) qui constitue une partie du siège de vanne (52) lorsque la vanne (32) est fermée.

5. Raccord de fluide (100) selon l'une des revendications 1 à 4, dans lequel le corps de vanne (18) est construit en deux parties avec une partie de réception (22) et une partie d'insertion (26), la partie de réception (22) présentant un alésage borgne (38) qui reçoit un pion (34) de la partie d'insertion (26), une rainure trapézoïdale (44) pour la bague d'étanchéité (50) étant formée entre une collerette (40) de la partie d'insertion (26) et une collerette (30) de la partie de réception (22).

6. Raccord de fluide (100) selon l'une des revendications 1 à 5, dans lequel la pièce de raccordement (16) présente un filetage extérieur (90) qui est conçu sous la forme d'un filetage extérieur en dents de scie, et dans lequel l'armature de raccordement (102) comprend un filetage intérieur en dents de scie (106) pour recevoir le filetage extérieur en dents de scie (90) de la pièce de raccordement (16) de l'accouplement de vanne et de mesure (2).

7. Raccord de fluide (100) selon l'une des revendications 1 à 6, dans lequel il est prévu entre deux et quatre passages (118), notamment deux.

8. Raccord de fluide (100) selon la revendication 7, dans lequel les passages (118) s'étendent de manière conique vers l'extérieur, vus depuis la surface de contact en direction du corps de vanne (18).

9. Raccord de fluide (100) selon l'une des revendications 1 à 8, avec une collerette d'appui (110) pour l'appui d'une douille d'appui (20) d'un accouplement de vanne et/ou de mesure (2).
